# DEMANDE DE BREVET EUROPEEN

(11) **EP 3 761 267 A1**
(43) Date de publication de la demande: **06.01.2021**
(21) Numéro de dépôt: 20172366.5
(22) Date de dépôt: 30.04.2020
(51) Int. Cl.: G06T 7/70

(54) **PROCÉDÉ ET DISPOSITIF DE DÉTERMINATION DE L'AMPLITUDE D'UN MOUVEMENT EFFECTUÉ PAR UN MEMBRE D'UN CORPS ARTICULÉ**

(30) Priorité: 05.07.2019 FR 1907560
(71) Demandeur: Fondation B-COM, 35510 Cesson-Sévigné (FR)
(72) Inventeur: MURIENNE, Albert, 35000 RENNES (FR); LAUNAY, Laurent, 35410 NOUVOITOU (FR)
(74) Mandataire: Jacobacci Coralis Harle

(57) **Abrégé**

La présente invention vise un procédé de détermination de l'amplitude d'un mouvement effectué par un membre d'un corps articulé. Ledit procédé comprend :
une obtention (E12) d'un segment représentatif du positionnement du membre dans un référentiel donné à l'issue dudit mouvement,
une génération (E16) d'un modèle du membre en trois dimensions, positionné dans ledit référentiel à l'aide du segment obtenu,
une obtention (E14) d'un nuage de points en trois dimensions représentant le membre dans ledit référentiel à l'issue dudit mouvement, à partir d'une information de profondeur fournie par un capteur, ladite information de profondeur définissant une scène en trois dimensions comprenant au moins une partie du corps articulé incluant ledit membre,
un repositionnement (E17) du modèle du membre de façon à minimiser un critère d'erreur prédéterminé entre le nuage de points obtenu et ledit modèle, et
une détermination (E18) de l'amplitude du mouvement, à partir du nouveau positionnement du modèle du membre.

## Description

### Domaine technique de l'invention

La présente invention concerne de manière générale le domaine technique de la vision numérique.

Elle porte en particulier sur un procédé et un dispositif de détermination de l'amplitude d'un mouvement effectué par un membre d'un corps articulé.

### Etat de la technique

La vision numérique peut être utilisée afin de déterminer l'amplitude d'un mouvement effectué par corps articulé, par exemple le corps d'un patient dans le cadre d'une rééducation médicale.

Pour ce faire, un système d'acquisition prend généralement une série de mesures afin de caractériser le mouvement du patient. L'amplitude du mouvement est alors inférée de ces mesures.

Un exemple est proposé dans l'article de Seung Hak Lee, Chiyul Yoon, Sun Gun Chung, Hee Chan Kim, Youngbin Kwak, Hee-won Park, Keewon Kim: "Measurement of Shoulder Range of Motion in Patients with Adhesive Capsulitis Using a Kinect", PLOS ONE | DOI:10.1371/journal.pone.0129398, June 24, 2015.

Ce document compare des mesures fournies d'une part via un goniomètre classiquement utilisé dans ce cadre, et d'autre part via un capteur de profondeur de type Kinect™. Si les valeurs des mesures fournies par le capteur de profondeur et le goniomètre sont proches, le degré de précision obtenu reste insuffisant, quel que soit l'outil de mesure utilisé. Par ailleurs, le capteur de profondeur de type Kinect™, bien que plus rapide dans l'acquisition des mesures, manque de robustesse dès que la position du patient n'est pas conforme à une représentation prédéterminée, par exemple lorsque le patient est positionné de dos au lieu d'être de face.

### Présentation de l'invention

Dans ce contexte l'invention propose un procédé de détermination de l'amplitude par rapport à une référence, d'un mouvement effectué par un membre d'un corps articulé, ledit procédé comprenant :
une obtention d'un segment représentatif du positionnement du membre dans un référentiel donné à l'issue dudit mouvement,
une génération d'un modèle du membre en trois dimensions, positionné dans ledit référentiel à l'aide du segment obtenu,
une obtention d'un nuage de points en trois dimensions représentant le membre dans ledit référentiel à l'issue dudit mouvement, à partir d'une information de profondeur fournie par un capteur, ladite information de profondeur définissant une scène en trois dimensions comprenant au moins une partie du corps articulé incluant ledit membre,
un repositionnement du modèle du membre de façon à minimiser un critère d'erreur prédéterminé entre le nuage de points obtenu et ledit modèle, et
une détermination de l'amplitude du mouvement, à partir du nouveau positionnement du modèle du membre.

L'invention permet de déterminer avec une grande précision l'amplitude d'un mouvement, de par l'utilisation d'un modèle repositionné sur le volume représentant le membre.

Par exemple, l'obtention du segment représentatif du membre comprend une estimation du squelette du corps articulé dite estimation squelettale, ledit segment correspondant à une partie du squelette estimé.

Selon un premier mode de mise en œuvre, l'obtention du segment représentatif du membre peut comprendre :
une obtention d'une image en deux dimensions représentant au moins une partie du corps articulé incluant ledit membre,
une estimation d'un squelette en deux dimensions du corps articulé, à partir de l'image en deux dimensions, et
une détection de points en deux dimensions caractérisant le membre, à l'aide du squelette estimé, ledit segment correspondant au segment en deux dimensions reliant lesdits points.

L'estimation squelettale sur une image en deux dimensions est simple à mettre en œuvre. Elle est par ailleurs peu couteuse en temps de calcul et en espace mémoire nécessaire.

Selon un deuxième mode de mise en œuvre, l'obtention du segment représentatif du membre comprend
une estimation du squelette en trois dimensions du corps articulé à partir de l'information de profondeur (par exemple la carte de profondeur couplée à une image RGB-D fournie par une caméra RGB-D ou une carte de profondeur seule, délivrée par un capteur de profondeur ou encore d'une information de profondeur inférée d'une image couleur fournie par une caméra),
une détection de points en trois dimensions caractérisant le membre, à l'aide du squelette estimé, ledit segment correspondant au segment en trois dimensions reliant lesdits points.

Ce mode de mise en œuvre permet d'améliorer la précision de l'amplitude déterminée.

Par exemple, le procédé peut comprendre en outre un traitement de l'image en deux dimensions de façon à placer la représentation du corps articulé au centre de l'image.

Cette étape a pour avantage de faciliter l'obtention d'un segment représentatif du positionnement du membre, en particulier lors d'une détection squelettale.

Le procédé peut comprendre en outre, si l'information de profondeur est une carte de profondeur, un traitement de la carte de profondeur de façon à placer la représentation du corps articulé au centre de ladite carte de profondeur.

De préférence, le segment est en outre représentatif d'au moins une grandeur caractérisant ledit membre, l'obtention du segment comprenant en outre
une comparaison entre une valeur de ladite grandeur et une plage de valeurs prédéterminées pour ladite grandeur, et
si ladite valeur n'appartient pas à ladite plage de valeurs, une nouvelle obtention d'un segment représentatif dudit membre, sinon
ladite génération du modèle du membre en fonction dudit segment obtenu.

Cette étape a pour avantage d'éliminer tout segment n'étant pas cohérent avec des dimensions possibles pour un membre humain par exemple.

Le procédé peut comprend en outre préalablement au repositionnement dudit modèle, un filtrage des points en trois dimensions du nuage de points obtenu, en fonction du segment obtenu.

L'utilisation d'un nuage de points filtré a pour avantage d'améliorer la précision de l'étape de repositionnement.

Par exemple le segment peut être en outre représentatif d'au moins une grandeur caractérisant ledit membre, la génération du modèle du membre comprenant en outre un dimensionnement dudit modèle en fonction de ladite grandeur.

Cette étape a pour but d'améliorer le réalisme du modèle et donc la mesure de l'amplitude du mouvement.

De préférence, le procédé peut comprendre en outre un post traitement du modèle du membre généré, de façon à supprimer au moins une partie du modèle, non-visible selon l'angle de vue du capteur.

Cette étape a pour avantage d'améliorer la rapidité d'exécution de l'étape de repositionnement.

Selon un autre aspect de l'invention, il est proposé un dispositif de détermination de l'amplitude par rapport à une référence, d'un mouvement effectué par un membre d'un corps articulé, ledit dispositif comprenant :
une unité d'obtention d'un segment représentatif du positionnement du membre dans un référentiel donné à l'issue dudit mouvement,
une unité de génération d'un modèle du membre en trois dimensions, positionné dans ledit référentiel à l'aide du segment obtenu,
une unité d'obtention d'un nuage de points en trois dimensions représentant le membre dans ledit référentiel à l'issue dudit mouvement, à partir d'une carte de profondeur fournie par un capteur, ladite carte de profondeur représentant une scène en trois dimensions comprenant au moins une partie du corps articulé incluant ledit membre,
une unité de repositionnement du modèle du membre de façon à minimiser un critère d'erreur prédéterminé entre le nuage de points obtenu et ledit modèle, et
une unité de détermination de l'amplitude du mouvement, à partir du nouveau positionnement du modèle du membre.

Selon une possibilité de réalisation, l'unité d'obtention du segment représentatif du positionnement du membre est configurée pour mettre en œuvre :
- une obtention d'une image en deux dimensions représentant au moins une partie du corps articulé incluant ledit membre,
- une estimation d'un squelette en deux dimensions du corps articulé, à partir de l'image en deux dimensions, et
- une détection de points en deux dimensions caractérisant le membre, à l'aide du squelette estimé, ledit segment correspondant au segment en deux dimensions reliant lesdits points.

Les différentes unités peuvent par exemple être mises en œuvre en pratique au moyen d'un processeur du dispositif, ce processeur étant programmé (par exemple au moyen d'instructions de programme d'ordinateur mémorisées dans une mémoire du dispositif de détermination) pour mettre en œuvre respectivement les étapes de détermination de l'amplitude d'un mouvement effectué par un membre d'un corps articulé.

Selon un autre aspect de l'invention, il est proposé un système de détermination de l'amplitude par rapport à une référence, d'un mouvement effectué par un membre d'un corps articulé, ledit système comprenant :
un dispositif tel que décrit ci-avant, et
un capteur couplé audit dispositif et apte à fournir la carte de profondeur.

Bien entendu, les différentes caractéristiques, variantes et formes de mise en œuvre de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de mise en œuvre de l'invention et où :
- la figure 1 représente un système de détermination de l'amplitude d'un mouvement effectué par un sujet dans un cas d'application particulier;
- la figure 2 illustre un procédé de détermination de l'amplitude d'un mouvement effectué selon un premier mode de mise en œuvre ;
- la figure 3 illustre des étapes du procédé de détermination de l'amplitude d'un mouvement effectué selon le premier mode de mise en œuvre ;
- la figure 4 illustre la détermination d'un angle représentatif de l'amplitude du mouvement ;
- la figure 5 illustre un procédé de détermination de l'amplitude d'un mouvement effectué selon un deuxième mode de mise en œuvre ;
- la figure 6 illustre des étapes du procédé de détermination de l'amplitude d'un mouvement effectué selon le deuxième mode de mise en œuvre ; et
- la figure 7 représente un dispositif de détermination de l'amplitude d'un mouvement effectué par un sujet, selon un mode de réalisation particulier.

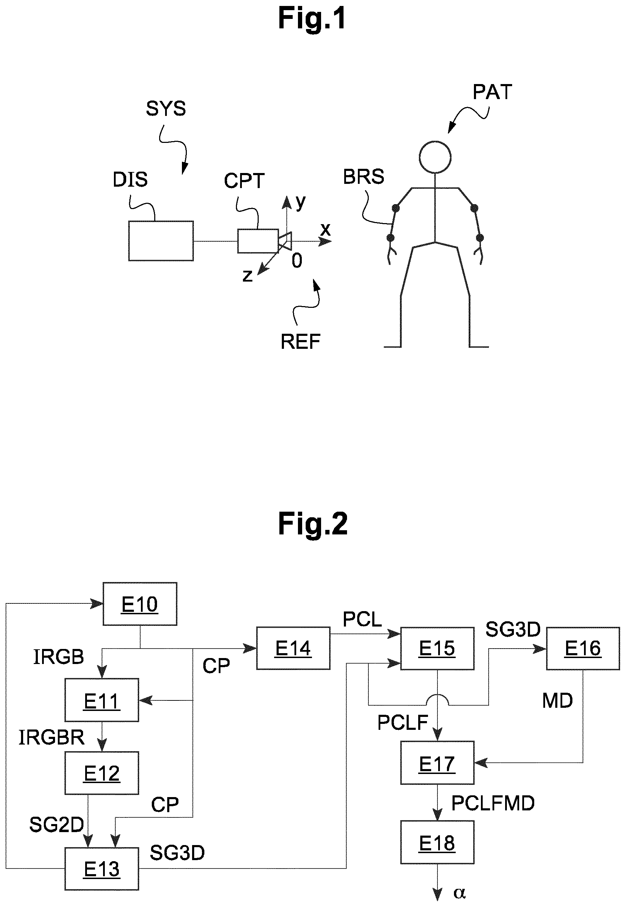

La **figure 1** représente un système SYS de détermination de l'amplitude d'un mouvement dans le cas particulier de la rééducation d'un patient PAT. La rééducation comprend l'analyse de l'amplitude du mouvement d'un membre du patient, par exemple suite à une intervention ayant entrainé une perte de mobilité pour le membre en question. L'invention n'est pas limitée à ce type d'application et peut être utilisée sur tout corps articulé ayant un membre mobile (êtres humains, animaux, androïde, exosquelette, la liste n'étant pas exhaustive). Selon l'invention, le patient PAT ne porte pas de marqueur servant à la détection de mouvement.

Dans cet exemple, le système SYS va permettre la détection de l'amplitude d'un mouvement effectué par un membre BRS du patient PAT, ici le bras. L'amplitude est mesurée par rapport à une référence, telle que la verticale ou l'horizontale, ou encore un autre membre auquel il est couplé.

Une scène en trois dimensions, intégrant au moins le membre BRS, est capturée par un capteur CPT apte à fournir une carte de profondeur de la scène. Par exemple, le capteur de profondeur peut être celui qui est incorporé au sein d'une caméra dite RGB-D qui fournit en plus d'une image couleur, une carte de profondeur correspondante, caractérisant la distance des objets de la scène par rapport au capteur CPT. Par exemple, le capteur CPT peut être de type Kinect™. Bien entendu, l'invention n'est pas limitée à ces types de capteur.

La distance ou profondeur est exprimée dans un référentiel REF donné, par exemple un référentiel lié au capteur CPT. Dans les modes de mise en œuvre décrit ci-après, l'un des axes du référentiel du capteur CPT est aligné avec l'axe horizontal à des fins de simplification, sans que ce choix ne soit limitatif. Dans la suite de la description, sauf indication contraire, les étapes seront effectuées en considérant le référentiel lié au capteur. L'homme du métier saura transposer des opérations effectuées dans un autre référentiel dans le référentiel lié au capteur.

Le capteur CPT est couplé à un dispositif DIS de détermination de l'amplitude d'un mouvement effectué par le patient PAT. L'ensemble forme le système SYS. Le capteur CPT délivre une carte de profondeur au dispositif DIS. Une caméra RGB-D peut également fournir une image couleur (par exemple selon le format connu dit RGB pour « Red, Green, Blue » en anglais) correspondant à la carte de profondeur.

La **figure 2** illustre un premier mode de mise en œuvre d'un procédé implémenté par le dispositif DIS. On considère pour ce premier mode de mise en œuvre que le capteur CPT fournit au dispositif DIS au moins une information de profondeur qui est ici une carte de profondeur CP définissant la scène, associée à une image RGB correspondante, chaque couple carte de profondeur et image RGB étant capturé à un instant t donné.

Une étape E10 comprend une capture d'au moins une carte de profondeur CP (c'est-à-dire une image de coordonnées basée sur les pixels) et d'une image RGB correspondante IRGB. Dans le cadre de la rééducation d'un patient, la carte de profondeur CP et l'image IRGB est capturée au moment où le patient a atteint l'amplitude maximale qu'il lui était possible d'atteindre, pour le mouvement considéré. On considère dans la suite de la procédure que l'image IRGB et la carte de profondeur CP correspondante sont alignées, c'est-à-dire exprimées dans le même référentiel. Dans le cas contraire une étape préalable d'alignement entre l'image IRGB et la carte de profondeur CP, connue de l'homme du métier, est à prévoir.

De préférence, ce premier mode de mise en œuvre comprend une étape E11 de recentrage de l'image IRGB sur le sujet considéré. Cette étape peut comprendre en outre une suppression des zones de l'image autour du sujet afin d'éliminer des éléments de la scène en trois dimensions qui pourraient perturber les étapes suivantes. En variante, le recentrage peut être réalisé par un algorithme d'estimation de squelette décrit ci-après, à l'étape E12.

Enfin cette étape E11 peut également comporter une mise au format carré de l'image IRGB. L'étape de recentrage E11 facilite les opérations réalisées dans la suite du procédé, en particulier l'étape E12.

De façon à positionner le sujet considéré au centre de l'image IRGB, la carte de profondeur peut être utilisée afin de séparer le patient du fond de la scène en trois dimensions. La zone de l'image IRGB correspondant au sujet isolé sur la carte de profondeur CP est alors obtenue, par exemple par l'intermédiaire de l'interface de programmation de la caméra RGB-D utilisée. L'image IRGB est alors recentrée sur le sujet. En variante, le positionnement du sujet au centre de l'image IRGB peut être réalisé à partir de la détection d'une partie du sujet et/ou d'un contour relatif au sujet dans l'image IRGB, par exemple le visage, et/ou d'une boîte englobant le visage (« bounding box » en langue anglaise).

A partir de l'image recentrée IRGBR, l'étape E12 permet d'obtenir un segment SG2D représentatif de son positionnement, c'est à dire dans cet exemple, de sa position et de son orientation selon le référentiel choisi. De préférence, le segment est également représentatif d'au moins une dimension du membre, par exemple sa longueur.

Le segment SG2D peut être obtenu par une estimation du squelette (ou estimation squelettale) en deux dimensions du patient (ou d'une partie du corps du patient). Cette estimation comprend la détection des articulations du patient ce qui permet d'obtenir des segments en deux dimensions, représentatifs des membres, un membre étant situé entre deux articulations. Par exemple, l'estimation squelettale peut être réalisée à l'aide d'un algorithme basé sur un apprentissage profond, par exemple la méthode dite de « Stacked Houglass » décrit dans l'article suivant : « Stacked Hourglass Networks for Human Pose Estimation, Alejandro Newell, Kaiyu Yang and Jia Deng, 26 Jul 2016 ».

L'estimation squelettale sur une image en deux dimensions permet une détection robuste du squelette du patient, ce qui initialise automatiquement et simplement le procédé.

En variante, le segment SG2D représentatif du membre peut être obtenu par un tracé réalisé sur l'image IRGBR par exemple par un utilisateur. En variante, le segment peut être obtenu en fournissant les positions en deux dimensions des articulations situées aux extrémités du membre considéré. Cette variante, plus simple à mettre en œuvre, est cependant moins précise.

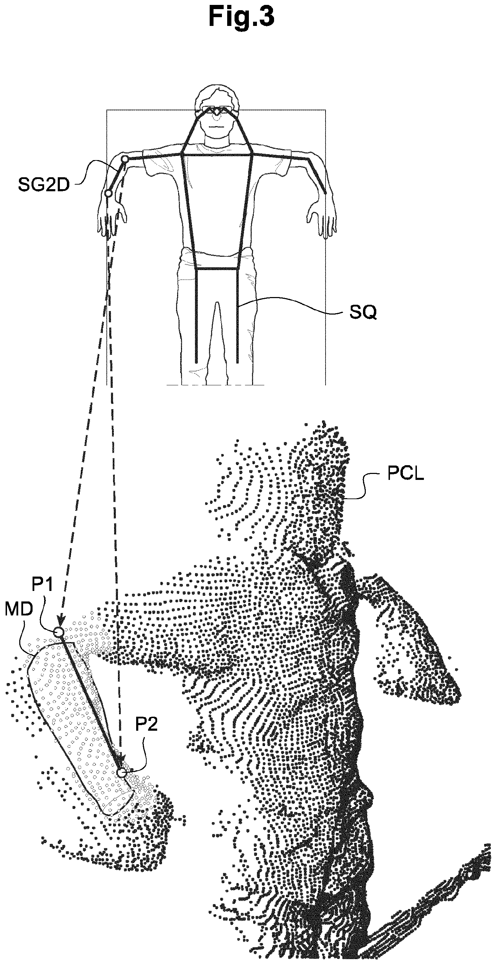

A titre d'exemple la partie supérieure de la figure 3 illustre un squelette SQ obtenu à partir d'une méthode d'estimation d'un modèle squelettale. Les membres de la partie supérieure du patient sont représentés par un segment. Le segment considéré SG2D pour ce premier mode de mise en œuvre correspond au bras droit du squelette SQ du patient.

Le procédé peut comprendre une étape E13 permettant de vérifier la validité du segment SG2D obtenu. Par exemple si le membre considéré est un bras, l'étape E13 peut consister à comparer la longueur du segment à une plage de valeurs anatomiquement cohérentes pour un bras. Si la longueur du segment SG2D est en dehors de cette plage de valeurs, on réitère les étapes E10 à E12. Sinon, le segment obtenu SG2D est validé. Un segment en trois dimensions SG3D est alors obtenu à partir du segment SG2D et de la carte de profondeur CP permettant à partir des coordonnées en deux dimensions du segment SG2D dans le référentiel du capteur, d'obtenir les coordonnées en trois dimensions correspondantes. Autrement dit dans ce mode de réalisation, la caméra délivre une image couleur 2D et le capteur de profondeur CPT associé à la caméra fournit la carte de profondeur CP. L'image couleur 2D permet d'obtenir le segment 2D par exemple à l'aide de la méthode d'estimation d'un modèle squelettale comme expliqué ci-avant. Les coordonnées en 2D du segment 2D sont alors exprimées dans le repère de la caméra. On peut alors obtenir les valeurs de profondeur en 3D associées à ces coordonnées en 2D, et donc la représentation en trois dimensions du segment, à l'aide de la carte de profondeur CP. Celle-ci peut être exprimée dans un autre repère que celui utilisé pour l'image couleur, tel que le repère REF lié au capteur de profondeur CPT. Dans ce cas est mis en œuvre un alignement des repères lors de l'étape préalable mentionnée ci-avant. L'alignement du repère de la caméra avec le repère du capteur est réalisé à l'aide de la transformée extrinsèque entre la caméra capturant l'image et le capteur de profondeur CPT, transformée qui est fournie par tout fabricant. On pourra par exemple se référer sur ces aspects au document "Projection in Rea/Sense SDK 2.0", Intel™ RealSense™ SDK Wiki, GitHub ou au document "Use Azure Kinect calibration functions", Use Sensor SDK, Azure Kinect™ DK documentation, Microsoft™ Docs.

Selon un autre mode de réalisation (non illustré), il est possible de déterminer les valeurs de profondeur associées aux pixels de l'image RGB utilisée pour obtenir le segment 2D, à l'aide de méthodes d'apprentissage connues comme celle décrite par exemple, dans l'article suivant : « Deep Ordinal Regression Network for Monocular Depth Estimation » de Huan Fu, Mingming Gong, Chaohui Wang, Kayhan Batmanghelich, Dacheng Tao, Juin 2018. Dans ce cas, le référentiel choisi peut être celui lié à la caméra RGB dans lequel sont exprimées les coordonnées du segment 2D. Lors d'une étape E14, les coordonnées de la carte de profondeur CP sont converties en nuage de points en trois dimensions PCL, grâce à une projection depuis le capteur de la caméra 2D vers l'espace en trois dimensions 3D, sur la base d'un modèle caméra « sténopé » ou « pinhole » en anglais. De préférence, le nuage de points PCL est filtré à l'étape E15, de façon à supprimer les points ayant une faible probabilité d'appartenir au membre considéré. Par exemple, le filtrage peut être effectué à l'aide des dimensions du segment SG3D ou encore les positions en trois dimensions des points situés aux extrémités du segment SG3D.

Ces points en trois dimensions P1 et P2 sont illustrés sur la partie basse de la figure 3. Ici le point P1 correspond ici à la projection de l'articulation du coude sur la peau, et le point P2 correspond à la projection de l'articulation du poignet sur la peau.

Les points du nuage de points ayant une position trop éloignée du segment en trois dimensions obtenu à partir des positions en trois dimensions des points P1 et P2, sont retirés du nuage de points PCL. On obtient un nuage de points filtré PCLF. L'utilisation d'un nuage de points filtré permet d'améliorer la précision de l'étape suivante E17.

Un modèle MD sous forme d'un nuage de points en trois dimensions de membre considéré est obtenu à l'étape E16, à partir d'une base de données préétablie dans ce cas particulier. Ce modèle MD peut être post-traité en étant par exemple redimensionné à l'aide de la longueur du segment en trois dimensions SG3D. Cette longueur correspond à la longueur entre les points P1 et P2 mentionnés ci-avant.

On considère dans cet exemple à des fins de simplifications, que le modèle est rigide, c'est-à-dire non-déformable.

L'utilisation du segment SG3D pour générer et redimensionner le modèle, fait que son axe correspond précisément à l'axe du membre du patient dans le référentiel du capteur.

Par ailleurs, l'étape E16 peut comprendre en outre une suppression des parties du modèle MD non visibles depuis le capteur CPT. Par exemple, si le point du vue du capteur CPT permet de voir le côté droit du modèle MD, les sommets correspondant au côté gauche du modèle MD sont supprimés.

Dans ce référentiel choisi, le nuage de points filtré PCLF et le modèle du membre MD se superposent comme illustré sur la **figure 3**. Dans un premier temps (non illustré), la position du modèle MD est initialisée à la position du segment délimité P1,P2, à la surface du bras du nuage de points PCLF dans ce mode de réalisation. Le modèle va être est progressivement repositionné comme décrit ci-dessous.

L'étape E17 comprend un repositionnement du modèle MD de façon à minimiser un critère d'erreur entre le positionnement du modèle MD et celui de la représentation du membre dans nuage de points filtrés PCLF. La position du modèle est initialisée à partir de la position du segment défini par les points P1, P2, puis progressivement repositionné à la position minimisant une erreur prédéterminée.

Par exemple, la méthode utilisée pour la minimisation de l'erreur peut être la méthode itérative dite « Iterative Closest Point (ICP)» en langue anglaise, décrite dans cet article : « A method for Registration of 3-D Shapes, Paul J. Best and Neil D. McKay, IEEE TRANSACTIONS OF PATTERN ANALYSIS AND MACHINE INTELLIGENCE, VOL. 14, NO. 2, FEBRUARY 1992 ».

Un objectif de l'algorithme ICP est de minimiser itérativement une distance entre deux nuages de points, ici le nuage de points PCLF et le modèle MD. Quatre étapes principales de l'algorithme sont :
- une première étape d'association des points par des critères liés au plus proche voisin ;
- une estimation pour les points associés, de paramètres de transformation en utilisant une fonction de coût quadratique moyenne ;
- une transformation des points associés en utilisant les paramètres estimés ; et
au moins une itération des étapes précédentes, tant qu'un critère d'arrêt n'est pas atteint, ici un seuil d'erreur. L'erreur à minimiser peut être une distance moyenne de l'ordre du centimètre entre le nuage PCLF et le modèle MD.

On obtient alors un nouveau positionnement du modèle du bras suite à cette étape de repositionnement.

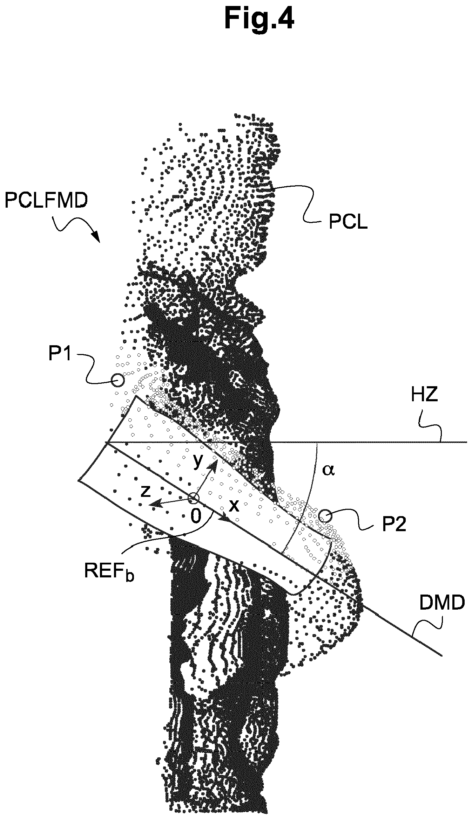

En sortie de l'étape E17, on obtient une image en trois dimensions PCLFMD telle que représentée sur la **figure 4**. De cette image est extraite à l'étape E18, une valeur représentative de l'amplitude du mouvement, par simple lecture ou de préférence de façon automatique. Ici la valeur est celle d'un angle α formé entre le modèle repositionné symbolisé par une droite DMD passant par son axe central, et l'horizontale HZ. Cet angle a, exprimé ici dans un repère lié au bras REf_{b} dont l'axe des abscisses correspond à l'axe central du bras, permet d'évaluer l'amplitude du mouvement du bras par rapport à l'horizontale. D'autres mesures peuvent être extraites pour évaluer cette amplitude, telles que des mesures dites anatomiques, relatives à des cibles à atteindre, par exemple en utilisant le score de Constant décrit dans l'article suivant : Constant CR, Murley AH, A clinical method of functional assessment of the shoulder, Clin Orthop Relat Res. 1987 Jan;(214):160.

La détermination de l'amplitude à partir du modèle repositionné selon l'invention permet d'obtenir une estimation de l'amplitude très précise, là où les solutions de l'art antérieur font des erreurs de quelques pixels qui conduisent à des décalages de plusieurs degrés dans l'estimation de l'amplitude.

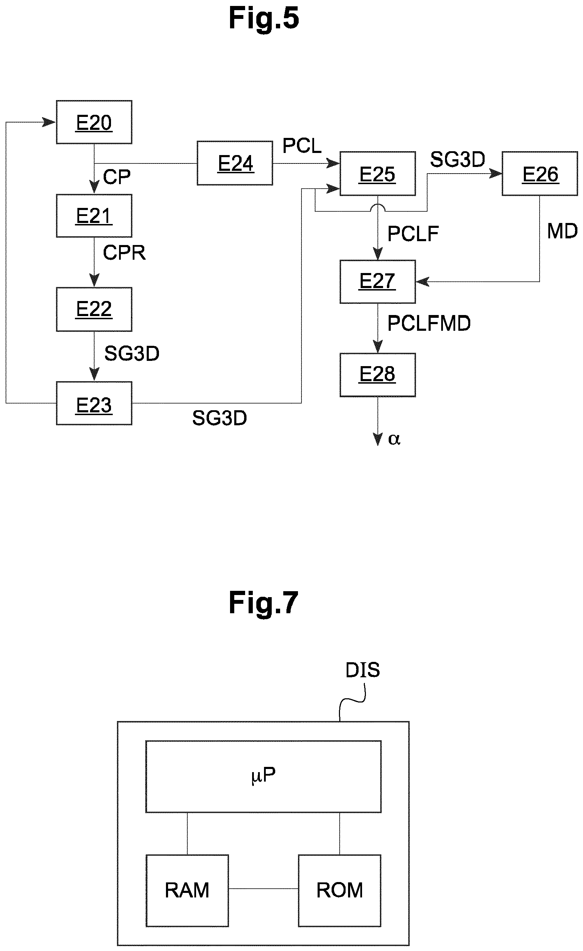

On se réfère à présent à la **figure 5** qui illustre une deuxième mode de mise en œuvre de l'invention.

Dans une première étape E20, une information de profondeur est fournie. Cette information de profondeur peut être une carte de profondeur CP délivrée par un capteur de profondeur. Cette carte de profondeur définit une scène en trois dimensions incluant au moins une partie du corps articulé avec le membre ayant effectué le mouvement dont on souhaite mesurer l'amplitude. En variante, une caméra RGB-D peut délivrer à l'étape E20, une image couleur simultanément à une carte de profondeur.

De même que pour l'image IRGB du mode de mise en œuvre précédent, lors de l'étape E21, lorsque l'information de profondeur est une carte de profondeur CP, elle peut être recentrée sur la représentation du corps articulé pour améliorer le traitement effectué lors des étapes suivantes.

En variante, si l'information de profondeur est une carte de profondeur couplée à une image RGB (caméra RGB-D), le procédé peut comprendre alors un traitement de la carte de profondeur et de l'image RGB correspondante (E21) de façon à placer la représentation du corps articulé au centre de ladite carte de profondeur et de l'image RGB.

Une estimation du squelette de corps articulé (ou d'une partie) en trois dimensions est réalisée à l'étape E22 sur la carte de profondeur recentrée CPR, par exemple à l'aide de la méthode décrite dans « 3D human pose estimation from depth maps using a deep combination of poses, Manuel J. Marin Jimenez, Francisco J. Romero-Ramirez, Rafael Munoz-Salinas, Rafael Medina-Carnicer », 2018 July.

Selon une autre variante non représentée, l'information de profondeur définissant la scène en trois dimensions peut être inférée d'une image couleur fournie par une caméra qui constitue alors le capteur. L'estimation du squelette en trois dimensions peut être alors réalisée à partir de l'information de profondeur inférée, comme décrit dans : « A simple yet effective baseline for 3d human pose estimation, Julieta Martinez, Rayat Hossain, Javier Romero, James J. Little, 2017 Aug. ». Préalablement à cette estimation squelettale, l'image couleur utilisée peut être recentrée sur le sujet considérée PAT.

Si l'information de profondeur est inférée d'une image couleur délivrée par le capteur, le procédé peut comprendre alors un traitement de l'image couleur (E21) de façon à placer la représentation du corps articulé au centre de ladite image couleur.

Les étapes de recentrage peuvent être réalisées en traitement préalable comme illustré sur la figure 5, ou par l'algorithme d'estimation squelettale utilisé lors de l'étape E22.

Dans le deuxième mode de mise en œuvre, les positions en trois dimensions des articulations elles-mêmes sont estimées, ce qui permet d'obtenir directement un segment en trois dimensions SG3D, représentatifs des membres, un membre étant situé entre deux articulations.

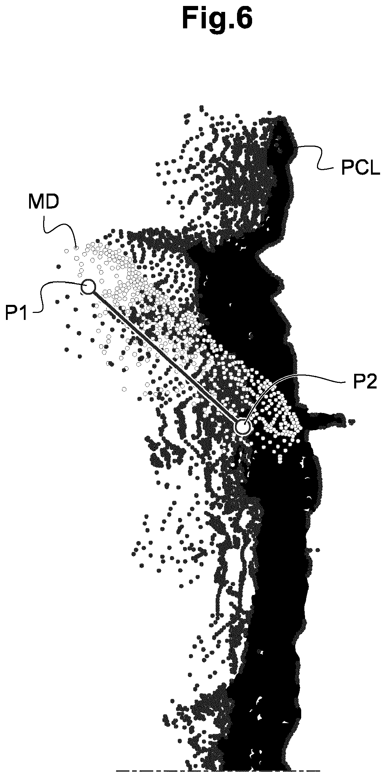

Le déroulement des étapes E23 à E28 est similaire à celui des étapes E13 à E18. Cependant comme illustré sur la **figure 6**, l'étape E28 diffère de l'étape E18 en ce que la position du modèle MD (points blancs) sur le nuage de points PCLF est initialisée sur le segment passant par les points P1 et P2 qui correspondent dans ce mode de mise en œuvre, à la position des articulations, étant donné que l'estimation squelettale de l'étape E22 a permis d'obtenir un squelette en trois dimensions. Le deuxième mode de mise en œuvre permet donc d'avoir une estimation de l'amplitude précise et convergeant rapidement vers une position optimale, du fait de la position du segment défini par P1, P2.

La **figure 7** illustre une manière particulière, parmi plusieurs possibles, de réaliser un dispositif DIS configuré pour mettre en œuvre un mode de mise en œuvre d'un procédé selon l'invention. Le dispositif DIS comprend une mémoire vive (par exemple une mémoire RAM), une unité de traitement µP équipée par exemple d'un processeur, et pilotée par un programme d'ordinateur stocké dans une mémoire morte (par exemple une mémoire ROM ou un disque dur). A l'initialisation, les instructions de code du programme d'ordinateur sont par exemple chargées dans la mémoire vive RAM avant d'être exécutées par le processeur de l'unité de traitement µP. Autrement dit, le programme d'ordinateur exécuté par le processeur, peut comporter des instructions pour la mise en œuvre d'un mode de mise en œuvre d'un procédé de détermination de l'amplitude d'un mouvement, tel que décrit ci-avant.

La figure 7 illustre seulement une manière particulière, parmi plusieurs possibles, de réaliser le dispositif DIS afin qu'il effectue certaines étapes du procédé selon l'invention. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le moyen de traitement est réalisé avec une machine de calcul reprogrammable, le programme correspondant (c'est-à-dire la séquence d'instructions) pourra être stocké dans un médium de stockage amovible ou non, ce médium de stockage étant lisible partiellement ou totalement par un ordinateur ou un processeur. Autrement dit, un programme d'ordinateur comprenant des instructions de code de programme pour l'exécution des étapes d'un mode de mise en œuvre d'un procédé de codage ou de décodage tel que décrit ci-avant, peuvent être enregistrées sur un support d'enregistrement lisible par un ordinateur.

Il va de soi que les modes de mise en œuvre et de mise en œuvre qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de détermination de l'amplitude par rapport à une référence, d'un mouvement effectué par un membre d'un corps articulé, ledit procédé comprenant :
une obtention (E12) d'un segment représentatif du positionnement du membre dans un référentiel donné à l'issue dudit mouvement,
une génération (E16) d'un modèle du membre en trois dimensions, positionné dans ledit référentiel à l'aide du segment obtenu,
une obtention (E14) d'un nuage de points en trois dimensions représentant le membre dans ledit référentiel à l'issue dudit mouvement, à partir d'une information de profondeur fournie par un capteur, ladite information de profondeur définissant une scène en trois dimensions comprenant au moins une partie du corps articulé incluant ledit membre,
un repositionnement (E17) du modèle du membre de façon à minimiser un critère d'erreur prédéterminé entre le nuage de points obtenu et ledit modèle, et
une détermination (E18) de l'amplitude du mouvement, à partir du nouveau positionnement du modèle du membre.

2. Procédé de détermination selon la revendication 1, dans lequel l'obtention du segment représentatif du membre comprend une estimation du squelette (SQ) du corps articulé dite estimation squelettale, ledit segment correspondant à une partie du squelette estimé.

3. Procédé de détermination selon la revendication 2, dans lequel l'obtention du segment représentatif du membre comprend :
une obtention d'une image en deux dimensions (IRGB) représentant au moins une partie du corps articulé incluant ledit membre,
une estimation du squelette (E12) en deux dimensions du corps articulé, à partir de l'image en deux dimensions, et
une détection de points en deux dimensions caractérisant le membre, à l'aide du squelette estimé, ledit segment correspondant au segment en deux dimensions reliant lesdits points.

4. Procédé de détermination selon la revendication 2, dans lequel l'obtention du segment représentatif du membre comprend
une estimation du squelette en trois dimensions du corps articulé à partir de l'information de profondeur,
une détection de points en trois dimensions caractérisant le membre, à l'aide du squelette estimé, ledit segment correspondant au segment en trois dimensions reliant lesdits points.

5. Procédé selon la revendication 3, dans lequel le procédé comprend en outre un traitement (E11) de l'image en deux dimensions de façon à placer la représentation du corps articulé au centre de l'image.

6. Procédé selon la revendication 4, dans lequel, l'information de profondeur est une carte de profondeur, le procédé comprenant en outre un traitement de la carte de profondeur (E21) de façon à placer la représentation du corps articulé au centre de ladite carte de profondeur.

7. Procédé selon la revendication 1, dans lequel le segment est en outre représentatif d'au moins une grandeur caractérisant ledit membre, l'obtention du segment comprenant en outre
une comparaison (E13) entre une valeur de ladite grandeur et une plage de valeurs prédéterminées pour ladite grandeur, et
si ladite valeur n'appartient pas à ladite plage de valeurs, une nouvelle obtention d'un segment représentatif dudit membre, sinon
ladite génération du modèle du membre en fonction dudit segment obtenu.

8. Procédé selon la revendication 7, dans lequel le procédé comprend en outre préalablement au repositionnement dudit modèle, un filtrage (E15) des points en trois dimensions du nuage de points obtenu, en fonction du segment obtenu.

9. Procédé selon la revendication 1, dans lequel le segment est en outre représentatif d'au moins une grandeur caractérisant ledit membre, la génération du modèle du membre comprenant en outre un dimensionnement (E16) dudit modèle en fonction de ladite grandeur.

10. Procédé selon la revendication 1, dans lequel le procédé comprend en outre un post traitement (E16) du modèle du membre généré, de façon à supprimer au moins une partie du modèle, non-visible selon l'angle de vue du capteur.

11. Dispositif de détermination de l'amplitude par rapport à une référence, d'un mouvement effectué par un membre d'un corps articulé, ledit dispositif comprenant :
une unité d'obtention d'un segment représentatif du positionnement du membre dans un référentiel donné à l'issue dudit mouvement,
une unité de génération d'un modèle du membre en trois dimensions, positionné dans ledit référentiel à l'aide du segment obtenu,
une unité d'obtention d'un nuage de points en trois dimensions représentant le membre dans ledit référentiel à l'issue dudit mouvement, à partir d'une information de profondeur fournie par un capteur, ladite information de profondeur définissant une scène en trois dimensions comprenant au moins une partie du corps articulé incluant ledit membre,
une unité de repositionnement du modèle du membre de façon à minimiser un critère d'erreur prédéterminé entre le nuage de points obtenu et ledit modèle, et
une unité de détermination de l'amplitude du mouvement, à partir du nouveau positionnement du modèle du membre.

12. Système de détermination de l'amplitude par rapport à une référence, d'un mouvement effectué par un membre d'un corps articulé, ledit système comprenant :
un dispositif selon la revendication 11, et
un capteur couplé audit dispositif et apte à fournir ladite information de profondeur.
